# EUROPÄISCHE PATENTSCHRIFT

(11) **EP 1 919 732 B1**
(45) Veröffentlichungstag und Bekanntmachung des Hinweises auf die Patenterteilung: **09.11.2011**
(21) Anmeldenummer: 06764262.9
(22) Anmeldetag: 28.07.2006
(51) Int. Cl.: B60N 2/36

(54) **FAHRZEUGSITZ**
MOTOR VEHICLE SEAT
SIEGE DE VEHICULE

(30) Priorität: 30.08.2005 DE 102005041156
(43) Veröffentlichungstag der Anmeldung: 14.05.2008
(73) Patentinhaber: Ford Global Technologies, LLC, Dearborn, MI 48126 (US)
(72) Erfinder: SOMESCHAN, Robert, 42781 Haan (DE); WILDEY, Andrew, Harpenden, Herts AL5 4QS (GB); SCHWARZE, Nicole, 31655 Stadthagen (DE)
(74) Vertreter: Bonsmann, Joachim Bernhard
(86) Internationale Anmeldenummer: PCT/EP2006/064804
(87) Internationale Veröffentlichungsnummer: WO 2007/025819

(56) Entgegenhaltungen:
- US-A- 3 011 822
- US-A1- 2003 042 749

## Beschreibung

Die vorliegende Erfindung betrifft einen Fahrzeugsitz. Insbesondere betrifft die vorliegende Erfindung einen Fahrzeugsitz, welcher eine verbesserte Funktionalität hinsichtlich der Bildung und Nutzung einer Ladefläche im Fahrzeug aufweist.

Aus der DE 42 24 427 C2 ist ein Notsitz für Fahrzeuge mit Sitzteil und Rückenlehne bekannt, die in Nichtgebrauchsstellung in einer Anklapplage am Boden eine ebene, eine Bodenvertiefung überdeckende Ladefläche bilden. Hierzu weist die Rückenlehne eine Lehnenplatte auf, deren Rückseite bei in Nichtgebrauchsstellung in eine Mulde des Fahrzeugbodens abgeklapptem Notsitz einen die Mulde überdeckenden Ladeflächenabschnitt bildet, wobei dieser Ladeflächenabschnitt durch einen an der Oberseite auf der Rückseite der Lehnenplatte der Rückenlehne befestigten Brückenabschnitt verlängert ist, der die Mulde in ihrem Endbereich überdeckt.

Aus der DE 197 02 258 C2 ist eine Sitzanordnung mit zumindest einem Sitz mit Sitzteil und Rückenteil bekannt, die jeweils aus einer zur Aufnahme eines Insassen vorgesehenen ersten Gebrauchsstellung in eine eine in etwa ebene Ladefläche bildende zweite Gebrauchsstellung überführbar sind, wobei das Rückenteil zur Ermöglichung eines Zugangs zu einem Stauraum unterhalb der Ladefläche in seiner waagerechten zweiten Gebrauchsstellung nach oben schwenkbar ausgebildet ist.

Aus der FR 2 857 917 A1 ist ein Sitzsystem bekannt, bei welchem die Rückenlehne in einem im Fahrzeugboden vorhandenen Hohlraum untergebracht und ein mit seitlich ausschwenkbaren Klappen versehenes Bodenteil an der Rückenlehne so angebracht ist, dass der Hohlraum durch das Bodenteil in der eingefahrenen Position abgedeckt wird.

Aus der EP 1 142 750 A2 ist eine Sitzanordnung für Fahrzeuge mit drei hintereinander angeordneten, aus mindestens zwei nebeneinander liegenden Sitzen mit Sitzkissen und Rückenlehne zusammengesetzten Sitzreihen bekannt, bei der bei den Sitzen der dritten Sitzreihe die Sitzkissen um eine vordere Schwenkachse um 180 ° und die Rückenlehnen um eine an der Lehnenunterkante festgelegte Schwenkachse um 90 ° jeweils nach vom schwenkbar sind. Die Sitzkissen der Sitze der dritten Sitzreihe sind auf einem Podest aufgenommen, und der Laderaumboden hinter der dritten Sitzreihe ist gegenüber diesem Podest um die Tiefe der Rückenlehnen der Sitze der zweiten Sitzreihe erhöht, damit nach Abklappen dieser Rückenlehnen deren Rückseite mit dem Laderaumboden fluchtet. Alternativ kann der Laderaum auch so ausgeführt sein, dass der Laderaumboden mit der Oberfläche des Podestes fluchtet. Während im erstgenannten Falle ein insgesamt ebener Ladeboden nur infolge der eigens unterschiedlich ausgebildeten Bodenhöhen im Fahrzeug erreicht wird, weist im letztgenannten Falle der Ladeboden einen stufenförmigen und den Ladevorgang behindernden Höhenübergang zwischen Laderaum und den Sitzen der dritten Sitzreihen auf.

Zudem ist sämtlichen vorgenannten Ausgestaltungen von Fahrzeugsitzen gemeinsam, dass in Gebrauchsposition, d.h. in einer zur Aufnahme eines Insassen auf seiner Sitzfläche bestimmten Position mit aufrechter Rückenlehne, die Gefahr besteht, dass kleine oder mittelgroße Gegenstände aus dem hinter dem jeweiligen Fahrzeugsitz befindlichen Laderaum etwa bei einem Bremsvorgang unter den Sitz gelangen können.

Aus der US 2003/0042749 A1 ist ein Fahrzeugsitz mit den Merkmalen des Oberbegriffs des Patentanspruches 1 bekannt.

Der vorliegenden Erfindung liegt die Aufhabe zugrunde, einen gattungsgemäßen Fahrzeugsitz bereitzustellen, der eine einfachere Konstruktion aufweist.

Diese Aufgabe wird gemäß den Merkmalen des unabhängigen Patentanspruchs 1 gelöst.

Hierzu ist bei einem Fahrzeugsitz mit einem Sitzkissen und einer Rückenlehne, wobei die Rückenlehne zwischen einer aufrechten Gebrauchsposition und einer im Wesentlichen waagerechten Ladeposition schwenkbar angebracht ist und auf ihrer Rückseite eine Abdeckplatte aufweist, die in der Ladeposition als Ladeboden dient, und mit wenigstens einem, um eine quer zur Fahrzeuglängsrichtung verlaufende Schwenkachse schwenkbar angebrachten Plattenabschnitt, dieser Plattenabschnitt derart angebracht, dass dieser in der Ladeposition im Einbauzustand ein Rampenelement bilden kann, das sich von dem durch die Rückseite der Abdeckplatte gebildeten Ladeboden bis zu einer Ladekante erstreckt. Dabei kann die Ladekante tiefer oder auch höher als der durch die Abdeckplatte gebildete Ladeboden liegen, so dass das Rampenelement in der Ladeposition jeweils schräg verläuft. Es ist im Rahmen der Erfindung jedoch auch möglich, dass Ladekante und Ladeboden auf einem Niveau liegen, so dass das Rampenelement eben verläuft.

Dadurch, dass der Plattenabschnitt in der Ladeposition ein sich zwischen der Ladekante und dem durch die Rückseite der Abdeckplatte gebildeten Ladeboden erstreckendes Rampenelement bildet, wird ein belastbarer Übergang zwischen dem Boden- bzw. Ladekantenbereich des Fahrzeugs und dem durch die Abdeckplatte gebildeten Ladeboden geschaffen, wobei die vom Laderaum aus ohne Hindernisse, Stufen etc. für ein Durchschieben von Gegenständen von der Heckseite bis über den Fahrzeugsitz bzw. die Rückseite der Rückenlehne nutzbare Ladefläche vergrößert wird. Dies wird erfindungsgemäß allein durch die Ausgestaltung des Fahrzeugsitzes und ohne Anpassungen am Fahrzeug erreicht, so dass die verbesserte Funktionalität hinsichtlich der Bildung und Nutzung der Ladefläche flexibel bereitgestellt wird, ohne dass eigens unterschiedlich ausgebildete Bodenhöhen im Fahrzeug erforderlich sind. Infolge des sich bis zu dem durch die Rückseite der Abdeckplatte gebildeten Ladeboden rampenförmig erstreckenden Plattenabschnittes wird zugleich ein zuverlässiger Schutz für die Rückenlehne gegenüber Beschädigungen durch Ladegut gewährleistet.

Ein weiterer wesentlicher Vorteil des erfindungsgemäß vorgesehenen Plattenabschnitts besteht darin, dass dieser infolge seiner schwenkbaren Anordnung entlang der Rückenlehnenunterkante der Rückenlehne in der Gebrauchsposition eine Position selbsttätig einnimmt, in welcher er von der Rückenlehne bzw. der daran angebrachten Abdeckplatte herabhängt und so je nach Abmessung eine teilweise oder vollständige Absperrung zwischen dem hinter dem Fahrzeugsitz befindlichen Laderaum und dem Bereich unter dem Fahrzeugsitz bildet, so dass kleine oder mittelgroße Gegenstände - etwa bei einem Bremsvorgang - nicht unter den Fahrzeugsitz gelangen können. Insgesamt übernimmt der erfindungsgemäß vorgesehene Plattenabschnitt somit gewissermaßen eine Doppelfunktion, nämlich die Funktion einer Ladehilfe (in Ladeposition der Rückenlehne) einerseits und die Funktion einer Absperrung (in Gebrauchsposition der Rückenlehne) andererseits.

Gemäß einer bevorzugten Ausführungsform ist zur Bildung einer vollständigen Absperrung in Gebrauchsposition der Rückenlehne der Plattenabschnitt derart bemessen, dass dieser in der aufrechten Gebrauchsposition der Rückenlehne in Kontakt mit dem Fahrzeugboden steht.

Gemäß einer weiteren bevorzugten Ausführungsform erstreckt sich der Plattenabschnitt im Wesentlichen über die gesamte Breite des Fahrzeugsitzes.

Gemäß einer weiteren bevorzugten Ausführungsform ist der Plattenabschnitt an der Abdeckplatte um die quer zur Fahrzeuglängsrichtung verlaufende Schwenkachse schwenkbar angelenkt, wobei die Schwenkachse im Bereich der Unterkante der Rückenlehne liegt.

Gemäß einer weiteren bevorzugten Ausführungsform ist der Plattenabschnitt derart angebracht, dass er bei Schwenken der Rückenlehne aus der Gebrauchsposition in die Ladeposition von selbst in seine die rampenförmige Ladefläche ausbildende Position übergeht. Gegebenfalls erfolgt dies nach vorherigem Lösen einer Fixiereinrichtung (beispielsweise Ziehen an einem Entriegelungsband). Durch diese selbsttätige Positionierung wird eine besonders einfache Handhabung erreicht, wobei außerdem infolge der Verschwenkbarkeit des Plattenabschnitts auch die Verstellbarkeit des Fahrzeugsitzes selbst nicht beeinträchtigt wird.

Gemäß einer weiteren bevorzugten Ausführungsform ist der Plattenabschnitt in Bezug auf die Abdeckplatte in beide Richtungen verschwenkbar, d.h., dass zwischen dem Plattenabschnitt und der Abdeckplatte Winkel gebildet werden können, die sowohl kleiner als auch größer als 180 ° sind. Bevorzugt ist der Plattenabschnitt in Bezug auf die Abdeckplatte in einem Winkelbereich schwenkbar, der zumindest den Bereich von 0 ° bis 270 ° umfasst.

Gemäß einer weiteren bevorzugten Ausführungsform ist eine Fixiereinrichtung (z.B. in Form eines Fixierungs- bzw. Entriegelungsbandes) vorgesehen, mittels der die Stellung des Plattenabschnitts in wenigstens einer Position fixierbar ist. Hierdurch kann die Stabilität der Plattenposition insbesondere in der Funktion als Absperrung und/oder in der Funktion als rampenförmig ansteigende Ladefläche erhöht werden.

Die Erfindung betrifft ferner eine Sitzanordnung in einem Fahrzeug mit wenigstens einem erfindungsgemäßen Fahrzeugsitz, sowie ein Fahrzeug mit einer solchen Sitzanordnung.

Weitere Ausgestaltungen der Erfindung sind der Beschreibung sowie den Unteransprüchen zu entnehmen.

Die Erfindung wird nachstehend anhand einer bevorzugten Ausführungsform unter Bezugnahme auf die beigefügten Abbildungen näher erläutert. Es zeigen:
- Figur 1: eine schematische Perspektivansicht eines erfindungsgemäßen Fahrzeugsitzes gemäß einer bevorzugten Ausführungsform in aufrechter Gebrauchsposition;
- Figur 2: einen Ausschnitt aus einer Sitzanordnung mit einem erfindungsgemäßen Fahrzeugsitz in Ladeposition;
- Figuren 3 und 4: eine schematische Perspektivansicht (Figur 3) und eine Seitenansicht (Figur 4) der vollständig auseinander geklappten Abdeckplatteneinrichtung des Fahrzeugsitzes von Figur 1 und 2;
- Figur 5: eine Schnittdarstellung eines erfindungsgemäßen Fahrzeugsitzes in der Ladeposition mit einer Darstellung des Fahrzeugbodens und der Ladekante; und
- Figur 6: eine Schnittdarstellung entsprechend Figur 5, bei der sich der Fahrzeugsitz in aufrechter Gebrauchsposition befindet.

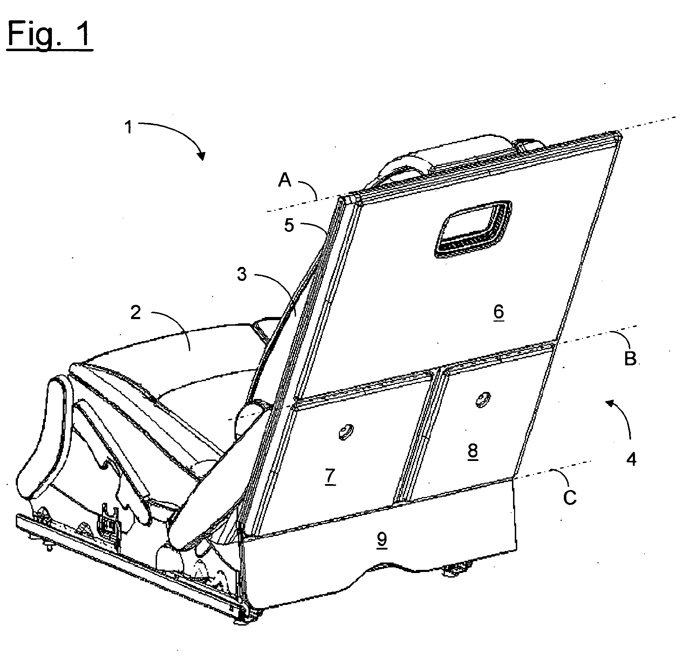

Fig. 1 zeigt einen erfindungsgemäßen Fahrzeugsitz 1 in einer bevorzugten Ausführungsform. Die Erfindung ist nicht auf eine bestimmte Sitzanordnung beschränkt, sondern grundsätzlich in einem beliebigen Fahrzeug mit einer beliebigen Anzahl bzw. Anordnung von Sitzreihen anwendbar.

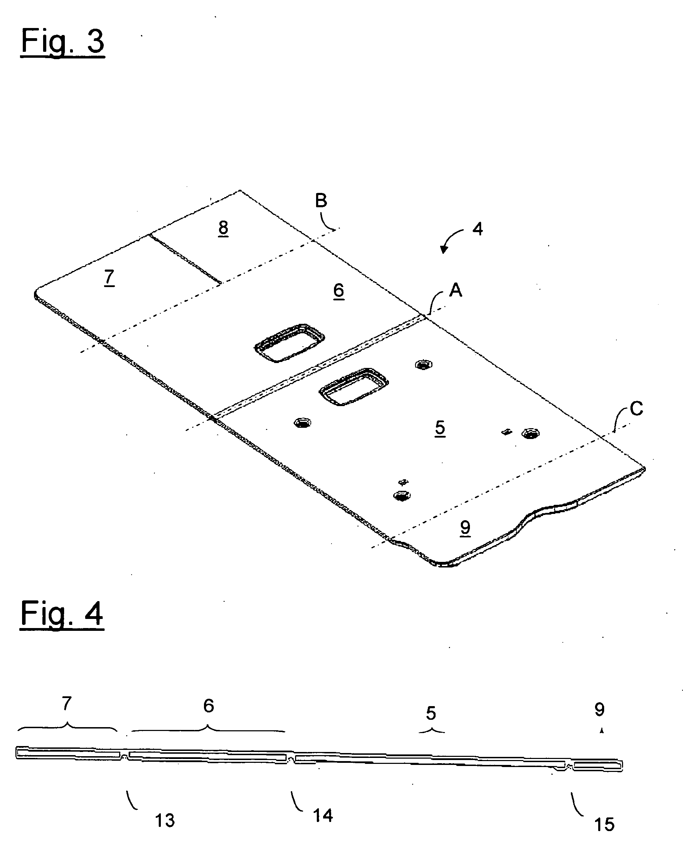

Der erfindungsgemäße Fahrzeugsitz 1 weist ein Sitzkissen 2, eine Rückenlehne 3 sowie eine Abdeckklappeneinrichtung 4 auf, die gemäß Fig. 1 an der Rückseite der Rückenlehne 3 angebracht ist und, wie am besten aus der Darstellung in Fig. 3 ersichtlich ist, mehrere nachfolgend detaillierter beschriebene Plattenabschnitte umfasst, welche mit einer Befestigungs- bzw. Abdeckplatte 5 verbunden sind, wobei die Abdeckplatte 5 wie aus Fig. 1 erkennbar an der Rückseite der Rückenlehne 3 fest montiert ist.

Im Einzelnen weist die Abdeckklappeneinrichtung 4 gemäß Fig. 3 quer zur Fahrzeuglängsrichtung nebeneinander angeordnet einen ersten Plattenabschnitt 7 und einen zweiten Plattenabschnitt 8 auf, welche jeweils an einem dritten Plattenabschnitt 6 um eine quer zur Fahrzeuglängsrichtung verlaufende Schwenkachse "B" schwenkbar angeordnet sind. Um je nach Einstellung der Sitze 11 und 12 der Sitzreihe 10 eine möglichst optimierte Ladefläche zu schaffen, kann erfindungsgemäß die Anordnung der Plattenabschnitte 7 und 8 der Abdeckplatteneinrichtung 4 entsprechend angepasst werden. Die schwenkbare Anlenkung der Plattenabschnitte 7 und 8 an dem dritten Plattenabschnitt 6 erfolgt mittels beliebiger geeigneter Scharniereinrichtungen, wobei in der Seitenansicht von Fig. 4 die Position der Scharniereinrichtung 13 zur schwenkbaren Anlenkung des ersten Plattenabschnitts 7 an dem dritten Plattenabschnitt 6 erkennbar ist. Wie ebenfalls aus Fig. 3 ersichtlich, ist der dritte Plattenabschnitt 6 seinerseits an der Abdeckplatte 5 um eine ebenfalls quer zur Fahrzeuglängsrichtung verlaufende Schwenkachse "A" schwenkbar angeordnet, welche gemäß Fig. 1 im Bereich der Rückenlehnenoberkante der Rückenlehne 3 festgelegt ist.

Entlang der gegenüberliegenden Kante der Abdeckplatte 5 ist gemäß Fig. 1 bis 3 ein vierter Plattenabschnitt 9 um eine ebenfalls quer zur Fahrzeuglängsrichtung verlaufende Schwenkachse "C" schwenkbar an der Abdeckplatte 5 angebracht. Der Plattenabschnitt kann jedoch alternativ auch an der Rückenlehne 3 schwenkbar angelenkt sein (nicht dargestellt). Die schwenkbare Anlenkung des dritten Plattenabschnitts 6 und des vierten Plattenabschnitts 9 an der Abdeckplatte 5 erfolgt wiederum mittels beliebiger geeigneter Schamiereinrichtungen 14 und 15, deren Position ebenfalls in der Seitenansicht von Fig. 4 dargestellt ist.

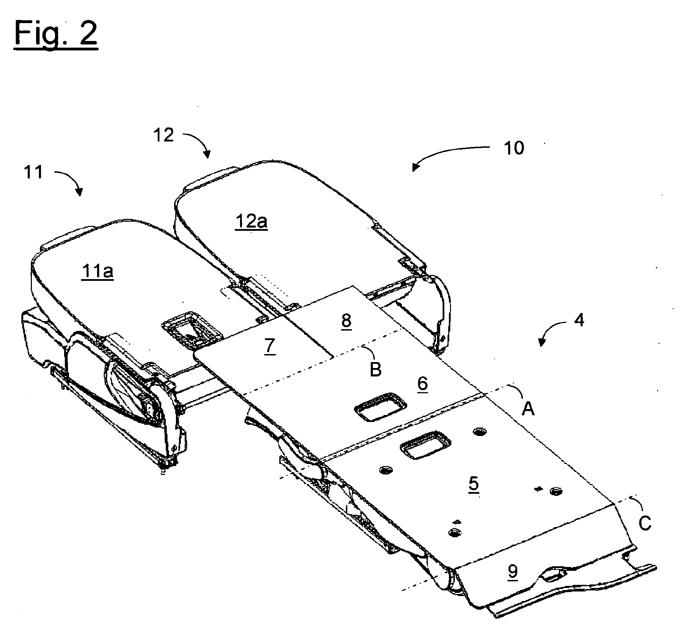

In der Anordnung von Fig. 2 befindet sich der (gemäß Fig. 1 in seiner Gebrauchsposition mit aufrechter Rückenlehne 3 dargestellte) Fahrzeugsitz 1 in Ladeposition, wozu in dem Ausführungsbeispiel das Sitzkissen 2 um eine quer zur Fahrzeuglängsrichtung verlaufende, nahe der in Fahrtrichtung vorderen Sitzkissenkante verlaufende Schwenkachse um ca. 180 ° nach vorne geschwenkt und sodann die Rückenlehne 3 nach vorne in die waagerechte Position umgelegt ist. Selbstverständlich ist die Erfindung jedoch nicht auf Sitzsausführungen mit schwenkbarem Sitzkissen 2 beschränkt, sondern auch beispielsweise in Ausgestaltungen realisierbar, bei denen das Sitzkissen zur Herstellung der Ladeposition im Wesentlichen in seiner Gebrauchsposition verbleibt und die Rückenlehne beim Umlegen nach vorne lediglich auf dieser aufgelegt wird (wie in Fig. 2 für die Sitze 11 und 12 der Sitzreihe 10 gezeigt).

Gemäß Fig. 2 ist der vierte Plattenabschnitt 9 entlang der Rückenlehnenunterkante der Rückenlehne 3 derart schwenkbar angebracht, dass er in der Ladeposition eine vom Fahrzeugboden bis zu dem durch die Rückseite der Abdeckplatte 5 gebildeten Ladeboden im Wesentlichen rampenförmig ansteigende Ladefläche bildet, wodurch ein belastbarer Übergang zwischen dem Bodenbereich des Fahrzeugs und dem durch die Abdeckplatte 5 gebildeten Ladeboden geschaffen wird. Bei Schwenken der Rückenlehne 3 ausgehend von der Ladeposition gemäß Fig. 2 in die in Fig. 1 gezeigt aufrechte Gebrauchsposition geht der vierte Plattenabschnitt 9 von selbst in eine Position über, in welcher er im Wesentlichen bis zum Fahrzeugboden herunterhängt und so gemäß Fig. 1 eine im Wesentlichen vollständige Absperrung zwischen dem hinter dem Fahrzeugsitz 1 befindlichen Laderaum und dem Bereich unter dem Fahrzeugsitz 1 bildet, so dass auf diese Weise verhindert wird, dass kleine oder mittelgroße Gegenstände etwa beim Abbremsen des Fahrzeugs unter den Fahrzeugsitz 1 gelangen können.

Vorzugsweise ist eine (nicht dargestellte) Fixiereinrichtung z.B. in Form eines Entriegelungsbandes vorgesehen, mittels dem der vierte Plattenabschnitt 9 in der Ladeposition und/oder in der Gebrauchsfunktion fixierbar ist, wobei diese Fixierung durch einfaches Ziehen des Entriegelungsbandes gelöst werden kann, woraufhin der Plattenabschnitt 9 dann bei Umschwenken der Rückenlehne in die jeweils andere Position (Lade- oder Gebrauchsposition) seine die Absperrung bzw. die rampenförmige Ladefläche bildende Position selbsttätig findet bzw. diese allein unter dem Einfluss der Schwerkraft einnimmt.

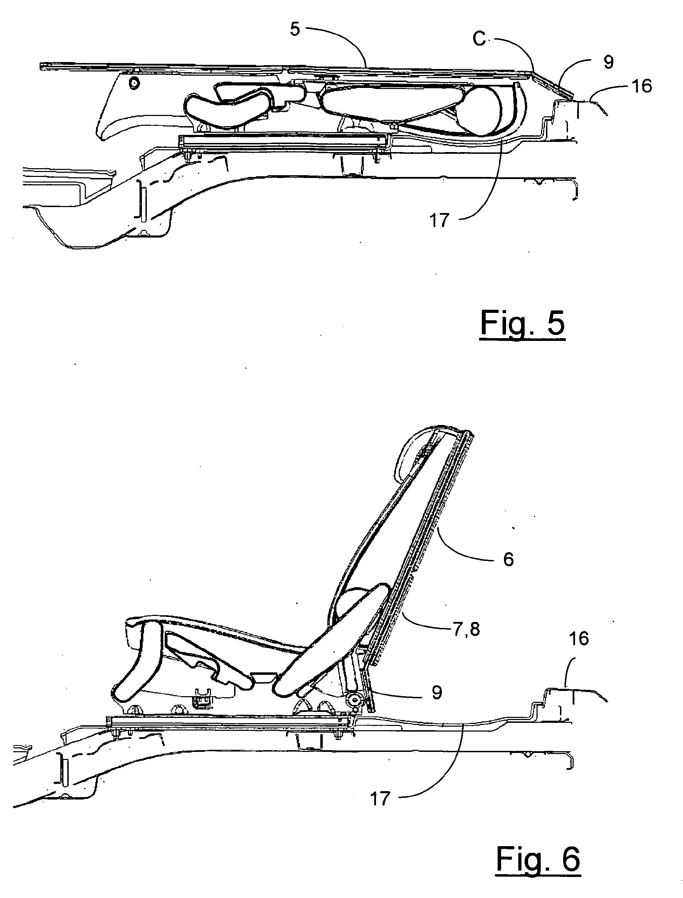

Die Figuren 5 und 6 zeigen die vorstehend erläuterte Sitzanordnung in Zusammenhang mit der Ladekante 16 eines Fahrzeuges, und zwar im aufrechten Zustand (Figur 6) und im Ladezustand (Figur 5). Wir ersichtlich, kann die heckseitige Ladekante 16 gegenüber dem davor liegenden Fahrzeugbodenbereich 17 erhöht ausgebildet sein; prinzipiell könnte der entsprechende Höhenunterschied bis zum Fahrzeugboden aber auch vollständig durch den Plattenabschnitt 9 ausgeglichen werden.

In dem in den Figuren 5 und 6 dargestellten Ausführungsbeispiel liegt die Ladekante 16 tiefer als der durch die Abdeckplatte 5 gebildete Ladeboden, so dass im Ladezustand der Plattenabschnitt 9 in Heckrichtung nach unten abfällt. Es ist jedoch auch möglich, dass die Ladekante höher liegt als der Ladeboden, so dass sich eine umgekehrte Neigung ergibt. Ferner können Ladekante 16 und Ladeboden auch niveaugleich angeordnet sein.

Die Erfindung ist selbstverständlich nicht auf die im konkreten Ausführungsbeispiel gezeigte Ausbildung des Fahrzeugsitzes mit einer aus einer Mehrzahl von Plattenabschnitten gebildeten Abdeckklappeneinrichtung 4 beschränkt. Vielmehr ist es zur Erzielung der erfindungsgemäßen Wirkung ausreichend, dass im Bereich der Rückenlehnenunterkante der Rückenlehne 3 der (im Ausführungsbeispiel vierte) Plattenabschnitt 9 schwenkbar angebracht ist, um in der Ladeposition die vom Fahrzeugboden bis zu dem durch die Rückseite der Abdeckplatte 5 gebildeten Ladeboden rampenförmig ansteigende Ladefläche zu bilden.

## Patentansprüche

1. Fahrzeugsitz mit einem Sitzkissen (2) und einer Rückenlehne (3), wobei die Rückenlehne (3) zwischen einer aufrechten Gebrauchsposition und einer im Wesentlichen waagerechten Ladeposition schwenkbar angebracht ist und auf ihrer Rückseite eine Abdeckplatte (5) aufweist, die in der Ladeposition einen Ladeboden bildet, wobei in Fortsetzung der Abdeckplatte (5) wenigstens ein um eine quer zur Fahrzeuglängsrichtung verlaufende Schwenkachse (C) schwenkbarer Plattenabschnitt (9) derart angelenkt ist, dass der Plattenabschnitt (9) in der Ladeposition ein sich zwischen dem durch die Abdeckplatte (5) gebildeten Ladeboden und einer Ladekante (16) erstreckendes Rampenelement bilden kann und in der aufrechten Gebrauchsposition der Rückenlehne (3) eine teilweise oder vollständige Absperrung zwischen dem hinter dem Fahrzeugsitz (1) befindlichen Laderaum und dem Bereich unter dem Fahrzeugsitz (1) bilden kann,
**dadurch gekennzeichnet, dass**
der Plattenabschnitt (9) mittels einer Scharniereinrichtung (15) schwenkbar an der Abdeckplatte (5) angelenkt ist, derart, dass der Plattenabschnitt (9) beim Schwenken der Rückenlehne (3) aus der Ladeposition in die aufrechte Gebrauchsposition allein unter dem Einfluss der Schwerkraft in eine Position übergeht, in welcher er im Wesentlichen bis zum Fahrzeugboden herunterhängt und so die Absperrung bildet.

2. Fahrzeugsitz nach Anspruch 1,
**dadurch gekennzeichnet, dass**
die Schwenkachse (C) im Bereich der Unterkante der Rückenlehne (3) liegt.

3. Fahrzeugsitz nach Anspruch 1 oder 2,
**dadurch gekennzeichnet, dass**
der Plattenabschnitt (9) derart bemessen ist, dass dieser in der aufrechten Gebrauchsposition der Rückenlehne (3) im Einbauzustand in einem Fahrzeug in Kontakt mit dem Fahrzeugboden steht.

4. Fahrzeugsitz nach einem der vorhergehenden Ansprüche,
**dadurch gekennzeichnet, dass**
der Plattenabschnitt (9) sich im Wesentlichen über die gesamte Breite des Fahrzeugsitzes (1) erstreckt.

5. Fahrzeugsitz nach einem der vorhergehenden Ansprüche,
**dadurch gekennzeichnet, dass**
der Plattenabschnitt (9) derart angebracht ist, dass dieser bei einem Schwenken der Rückenlehne (3) aus der Gebrauchsposition in die Ladeposition von selbst in die ein Rampenelement bildende Position übergeht.

6. Fahrzeugsitz nach einem der vorhergehenden Ansprüche,
**dadurch gekennzeichnet, dass**
der Plattenabschnitt (9) in Bezug auf die Abdeckplatte (5) in einem Winkelbereich schwenkbar ist, der zumindest den Bereich von 0° bis 270° umfasst.

7. Fahrzeugsitz nach einem der vorhergehenden Ansprüche,
**dadurch gekennzeichnet, dass**
eine Fixiereinrichtung vorgesehen ist, mittels derer die Stellung des Plattenabschnitts (9) in wenigstens einer Position fixierbar ist.

8. Sitzanordnung in einem Fahrzeug,
**dadurch gekennzeichnet, dass**
diese wenigstens einen Fahrzeugsitz (1) nach einem der vorhergehenden Ansprüche aufweist.

9. Fahrzeug,
**dadurch gekennzeichnet, dass**
es eine Sitzanordnung nach Anspruch 8 aufweist.

## Claims

1. A vehicle seat comprising a seat cushion (2) and a backrest (3), wherein the backrest (3) is mounted pivotably between an upright position of use and a substantially horizontal load position and on its rear side has a cover plate (5) which in the load position forms a load floor, wherein at least one plate portion (9) pivotable about a pivot axis (C) extending transversely relative to the longitudinal direction of the vehicle is pivotably mounted as a continuation of the cover plate (5) in such a way that the plate portion (9) in the load position can form a ramp element extending between the load floor formed by the cover plate (5) and a load edge (16) and in the upright position of use of the backrest (3) can form a partial or complete closure between the load space behind the vehicle seat (1) and the region under the vehicle seat (1),
**characterised in that**
the plate portion (9) is mounted to the cover plate (5) pivotably by means of a hinge device (15) in such a way that upon the pivotal movement of the backrest (3) out of the load position into the upright position of use the plate portion (9) moves solely under the influence of the force of gravity into a position in which it hangs down substantially as far as the vehicle floor and thus forms the closure.

2. A vehicle seat according to claim 1 **characterised in that** the pivot axis (C) is in the region of the lower edge of the backrest (3).

3. A vehicle seat according to claim 1 or claim 2 **characterised in that** the plate portion (9) is of such a size that in the upright position of use of the backrest (3) the plate portion is in contact with the vehicle floor in the condition of installation in a vehicle.

4. A vehicle seat according to one of the preceding claims **characterised in that** the plate portion (9) extends substantially over the entire width of the vehicle seat (1).

5. A vehicle seat according to one of the preceding claims **characterised in that** the plate portion (9) is so mounted that upon a pivotal movement of the backrest (3) out of the position of use into the load position the plate portion moves by itself into the position of forming a ramp element.

6. A vehicle seat according to one of the preceding claims **characterised in that** the plate portion (9) is pivotable with respect to the cover plate (5) in an angle range which includes at least the range of 0° to 270°.

7. A vehicle seat according to one of the preceding claims **characterised in that** there is provided a fixing device by means of which the position of the plate portion (9) can be fixed in at least one position.

8. A seat arrangement in a vehicle **characterised in that** it has at least one vehicle seat (1) according to one of the preceding claims.

9. A vehicle **characterised in that** it has a seat arrangement according to claim 8.

## Revendications

1. Siège de véhicule comprenant un coussin de siège (2) et un dossier (3), le dossier (3) étant monté de manière à pouvoir pivoter entre une position d'utilisation redressée et une position de chargement essentiellement horizontale et présentant sur son côté arrière une plaque de recouvrement (5) qui forme un fond de chargement dans la position de chargement, au moins une portion de plaque (9) pouvant pivoter autour d'un axe de pivotement (C) s'étendant transversalement à la direction longitudinale du véhicule étant articulée dans le prolongement de la plaque de recouvrement (5) de telle sorte que la portion de plaque (9) puisse former, dans la position de chargement, un élément de rampe s'étendant entre le fond de chargement formé par la plaque de recouvrement (5) et un bord de chargement (16) et puisse former, dans la position d'utilisation du dossier (3), un blocage partiel ou complet entre l'espace de chargement se trouvant derrière le siège du véhicule (1) et la région sous le siège du véhicule (1),
**caractérisé en ce que**
la portion de plaque (9) est articulée au moyen d'un dispositif de charnière (15) de manière pivotante à la plaque de recouvrement (5) de telle sorte que la portion de plaque (9), lors du pivotement du dossier (3) hors de la position de chargement dans la position d'utilisation redressée, passe, seulement sous l'effet de la force de pesanteur, dans une position dans laquelle elle est suspendue essentiellement jusqu'au plancher du véhicule, et forme ainsi le blocage.

2. Siège de véhicule selon la revendication 1,
**caractérisé en ce que**
l'axe de pivotement (C) se situe dans la région du bord inférieur du dossier (3).

3. Siège de véhicule selon la revendication 1 ou 2,
**caractérisé en ce que**
la portion de plaque (9) est dimensionnée de telle sorte qu'elle soit en contact avec le plancher du véhicule dans la position redressée du dossier (3) dans l'état monté dans un véhicule.

4. Siège de véhicule selon l'une quelconque des revendications précédentes,
**caractérisé en ce que**
la portion de plaque (9) s'étend essentiellement sur toute la largeur du siège du véhicule (1).

5. Siège de véhicule selon l'une quelconque des revendications précédentes,
**caractérisé en ce que**
la portion de plaque (9) est montée de telle sorte qu'elle passe d'elle-même dans la position formant un élément de rampe lors d'un pivotement du dossier (3) de la position d'utilisation dans la position de chargement.

6. Siège de véhicule selon l'une quelconque des revendications précédentes,
**caractérisé en ce que**
la portion de plaque (9) peut pivoter par rapport à la plaque de recouvrement (5) dans une plage angulaire qui comprend au moins la plage comprise entre 0° et 270°.

7. Siège de véhicule selon l'une quelconque des revendications précédentes,
**caractérisé en ce**
**qu'**il est prévu un dispositif de fixation au moyen duquel la position de la portion de plaque (9) peut être fixée dans au moins une position.

8. Agencement de siège dans un véhicule,
**caractérisé en ce que**
celui-ci présente au moins un siège de véhicule (1) selon l'une quelconque des revendications précédentes.

9. Véhicule,
**caractérisé en ce**
**qu'**il présente un agencement de siège selon la revendication 8.
